(19) Europäisches Patentamt
European Patent Office
Office européen des brevets

(11) EP 4 744 863 A1

# (12) EUROPEAN PATENT APPLICATION

(43) Date of publication:
**20.05.2026 Bulletin 2026/21**

(21) Application number: **25215176.6**

(22) Date of filing: **12.11.2025**

(51) International Patent Classification (IPC):
***B29C 64/10*** *(2017.01)* ***B29C 64/314*** *(2017.01)*
***C08G 65/40*** *(2006.01)* ***C08L 1/12*** *(2006.01)*
***C08K 5/053*** *(2006.01)*

(52) Cooperative Patent Classification (CPC):
(C-Sets available)
**C08L 1/12; B29C 64/10; B29C 64/314;**
**C08G 65/40; C08K 5/053** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.11.2024 JP 2024197941**

(71) Applicants:
- **Daicel Corporation**
  **Osaka-shi, Osaka 530-0011 (JP)**
- **Sanyo Chemical Industries, Ltd.**
  **Kyoto-shi, Kyoto 605-0995 (JP)**

(72) Inventors:
- **MORIMOTO, Hitomi**
  **Minato-ku, Tokyo, 108-8230 (JP)**
- **YAMAKAWA, Akira**
  **Minato-ku, Tokyo, 108-8230 (JP)**
- **KITA, Ai**
  **Kyoto-shi, Kyoto, 605-0995 (JP)**
- **MATSUMOTO, Makoto**
  **Kyoto-shi, Kyoto, 605-0995 (JP)**

(74) Representative: **Müller-Boré & Partner Patentanwälte PartG mbB**
**Friedenheimer Brücke 21**
**80639 München (DE)**

## (54) CELLULOSE ESTER RESIN COMPOSITION, SHAPED ARTICLE, AND METHODS FOR PRODUCING SAME

(57) [Problem to be Solved]

There is provided a cellulose ester resin composition for use in material extrusion in which smoke generation is suppressed when the cellulose ester resin composition is extruded from an extruder.

[Solution]

A cellulose ester resin composition for use in material extrusion, the composition comprising: a cellulose ester resin; and a polyvalent hydroxyl compound represented by General Formula (1):

$$H\text{-}(OA)_{n1}\text{-}O\text{-}C_6H_4\text{-}X\text{-}C_6H_4\text{-}O\text{-}(AO)_{n2}\text{-}H \quad (1)$$

where $C_6H_4$ is a benzene residue with two hydrogen removed from benzene, X is a methylene group or a dimethylmethylene group, A is an ethylene group or a methylethylene group, a sum of n1 and n2 is 3 to 10, and n1 and n2 are each independently an integer of from 1 to 7.

EP 4 744 863 A1

(52) Cooperative Patent Classification (CPC): (Cont.)

C-Sets
**C08K 5/053, C08L 1/12;**
**C08L 1/12, C08L 71/10**

## Description

### Technical Field

The present disclosure relates to a cellulose ester resin composition, a shaped article, and methods for producing the same.

### Background Art

Cellulose is a well-known plant-derived material, and is known to have mechanical properties corresponding to those of engineering plastics.

In recent years, as a method of 3D printing (also referred to as three-dimensional printing), Material Extrusion (MEX) is known. Among MEX, Fused Deposition Modeling (FDM) and Fused Granulate Fabrication (FGF) have attracted attention from a technical point of view.

As an example of using a cellulose derivative in a shaping material for a 3D printer, for example, Patent Document 1 discloses "a shaping material for a 3D printer in which cellulose acetate is blended in an amount of from 70 to 80 mass% and a plasticizer is blended in an amount ranging from 20 to 30 mass%".

### Citation List

### Patent Document

Patent Document 1: JP 2024-43226 A

### Summary of Invention

### Technical Problem

As described above, as the shaping material for a 3D printer, the shaping material in which cellulose acetate is blended in a range of from 70 to 80 mass% and the plasticizer is blended in an amount ranging from 20 to 30 mass% is known.

The inventors of the present disclosure attempted to use a cellulose ester resin composition having such a composition as the shaping material for a 3D printer. However, there caused a problem that, when the cellulose ester resin composition is extruded from a nozzle of an extruder of the 3D printer, smoke is generated from a nozzle portion. If an amount of smoke generated from the nozzle portion is small, the generated smoke can be handled by installing a local exhaust system near the nozzle portion.

However, for example, in a case where a large shaped article is printed using the 3D printer, it is necessary to move the nozzle for each extruder during the shaping. That is, such a large shaped article cannot be fabricated when the nozzle is fixed and a stage is moved. In the above case, it is difficult to permanently install the local exhaust system in the vicinity of the nozzle and move the local exhaust system. In addition, an increase in amount of the smoke generated from the nozzle of the extruder causes various problems. For example, a liquefied product is adhered to various places in a manufacturing system of the 3D printer, the liquefied product falls, and thus, the shaped article is contaminated. The 3D printer also involves a problem that smoke is easily generated, since the 3D printer can prevent delamination of a large shaped article by increasing an extrusion temperature and reducing a viscosity of the resin.

As a result of studies by the inventors of the present disclosure, it has been found that most of the substance causing such smoke generation is the plasticizer contained in the cellulose ester resin composition. The plasticizer blended in the cellulose ester resin composition has a low molecular weight and a low melting point, and thus, vaporizes during extrusion of the cellulose ester resin composition to generate smoke. The vaporized plasticizer is then condensed into a liquid product at a portion around the extruder in which the temperature is low at the portion. Such a liquid product may be mixed with dust or the like and forms a pollutant, and the pollutant may fall onto the 3D shaped article.

An object of the present disclosure is to provide a cellulose ester resin composition for use in material extrusion in which smoke generation is suppressed when the cellulose ester resin composition is extruded from an extruder. Another object of the present disclosure is to provide a method for producing a cellulose ester resin composition, a shaped article including the cellulose ester resin composition, and a method for producing the shaped article.

### Solution to Problem

The inventor of the present disclosure conducted intensive studies to solve the above problems. As a result, it has

been found that, in a case where a cellulose ester resin composition including a cellulose ester resin and a predetermined polyvalent hydroxyl compound is used in material extrusion, smoke generation is suppressed when the cellulose ester resin composition is extruded from an extruder.

The present disclosure has been completed through further examinations based on these findings. The present disclosure provides the following aspects.

Item 1. A cellulose ester resin composition for use in material extrusion, the composition including: a cellulose ester resin; and a polyvalent hydroxyl compound represented by General Formula (1):

$$H\text{-}(OA)_{n1}\text{-}O\text{-}C_6H_4\text{-}X\text{-}C_6H_4\text{-}O\text{-}(AO)_{n2}\text{-}H \qquad (1)$$

where $C_6H_4$ is a benzene residue with two hydrogen removed from benzene, X is a methylene group or a dimethylmethylene group, A is an ethylene group or a methylethylene group, the sum of n1 and n2 is 3 to 10, and n1 and n2 are each independently an integer of from 1 to 7.

Item 2. The cellulose ester resin composition according to Item 1, wherein the cellulose ester resin is cellulose acetate.

Item 3. The cellulose ester resin composition according to Item 1 or 2, wherein a proportion of a mass of the polyvalent hydroxyl compound represented by General Formula (1) is from 10 to 50 mass% when a total mass of the cellulose ester resin and the polyvalent hydroxyl compound represented by General Formula (1) is 100 mass%.

Item 4. The cellulose ester resin composition according to any one of Items 1 to 3, wherein a proportion of a mass of the cellulose ester resin is from 50 to 90 mass% when a total mass of the cellulose ester resin and the polyvalent hydroxyl compound represented by General Formula (1) is 100 mass%.

Item 5. The cellulose ester resin composition according to any one of Items 1 to 4, wherein the cellulose ester resin composition has a pellet form or a filament form.

Item 6. A shaping material for a 3D printer, the shaping material including the cellulose ester resin composition described in any one of Items 1 to 5.

Item 7. A shaped article obtained by molding the shaping material for a 3D printer described in Item 6.

Item 8. A method for producing a shaped article, the method including shaping the cellulose ester resin composition described in any one of Items 1 to 7.

Item 9. The method for producing a shaped article according to Item 8, the method using a 3D printer, the 3D printer including at least a chamber, the chamber including a heatable base, an extrusion head, and a feeding unit of a shaping material for a 3D printer; and
feeding the shaping material for a 3D printer described in any one of Item s 1 to 7 to the feeding unit of the shaping material for a 3D printer.

Item 10. The method for producing a shaped article according to Item 9, wherein

the extrusion head includes a screw structure in the extrusion head, and
the extrusion head has a function of heat-melting the shaping material for a 3D printer.

Item 11. A method for producing a cellulose ester resin composition for use in material extrusion, the method including melt-kneading a raw material composition including a cellulose ester resin and a polyvalent hydroxyl compound represented by General Formula (1):

$$H\text{-}(OA)_{n1}\text{-}O\text{-}C_6H_4\text{-}X\text{-}C_6H_4\text{-}O\text{-}(AO)_{n2}\text{-}H \qquad (1)$$

where $C_6H_4$ is a benzene residue with two hydrogen removed from benzene, X is a methylene group or a dimethylmethylene group, A is an ethylene group or a methylethylene group, a sum of n1 and n2 is 3 to 10, and n1 and n2 are each independently an integer of from 1 to 7.

Advantageous Effects of Invention

According to an embodiment of the present disclosure, it is possible to provide a cellulose ester resin composition for use in material extrusion in which smoke generation is suppressed when the cellulose ester resin composition is extruded from an extruder. Further, according to another embodiment of the present disclosure, it is possible to provide a method for producing the cellulose ester resin composition, a shaped article including the cellulose ester resin composition, and a method for producing the shaped article. Furthermore, a large molded article having high interlayer adhesion strength can be produced.

Description of Embodiments

Each of the configurations in each of the embodiments, combinations thereof, and the like is an example, and various additions, omissions, substitutions, and other changes of the configurations may be made as appropriate without departing from the spirit of the present disclosure. The present disclosure is not limited to the embodiments.

In numerical ranges described stepwise in the present disclosure, an upper or lower limit value described in a numerical range may be replaced by an upper or lower limit value of another numerical range described stepwise. In addition, any two of separately described upper limit values and lower limit values may be combined and such combinations may be expressed as numerical ranges, respectively. Also, in numerical ranges described in the present disclosure, an upper or lower limit value described in a numerical range may be replaced by a value shown in Examples.

In addition, in the present disclosure, the cellulose ester resin composition includes a raw material (such as a raw material in the filament form or the pellet form as described below) for subjecting the cellulose ester resin composition to material extrusion (such as a method using a 3D printer), and the molded article of the cellulose ester resin composition includes a shaped article obtained by shaping the cellulose ester resin composition using the 3D printer.

Cellulose Ester Resin Composition

The cellulose ester resin composition according to an embodiment of the present disclosure is a resin composition including at least a cellulose ester resin and a polyvalent hydroxyl compound represented by General Formula (1) described below.

Cellulose Ester

The cellulose ester resin contained in the cellulose ester resin composition according to an embodiment of the present disclosure may be a known cellulose ester resin.

Specific examples of the cellulose ester resin include cellulose fatty acid esters (such as cellulose acetate, cellulose propionate, cellulose butyrate, cellulose acetate propionate, and cellulose acetate butyrate), partially alkylated cellulose fatty acid esters (such as methyl cellulose acetate, ethyl cellulose acetate, and propyl cellulose acetate), in which some of hydroxyl groups of cellulose are substituted with alkyl groups, hydroxyalkoxycellulose fatty acid esters (such as hydroxyethyl cellulose acetate, and hydroxypropyl cellulose acetate), in which some of hydroxyl groups of cellulose are substituted with hydroxyalkoxy groups, and polyester-grafted cellulose esters (such as polycaprolactone-grafted cellulose acetate). Only one type of the cellulose ester resin or two or more types of the cellulose ester resin may be included in the cellulose ester resin composition according to an embodiment of the present disclosure.

Among these cellulose ester resins, cellulose fatty acid esters are preferable, and cellulose acetate is more preferable, because they are suitable for use in material extrusion.

In cellulose acetate, at least some of hydrogen atoms of hydroxyl groups contained in cellulose ($(C_6H_{10}O_5)_n$) are substituted with acetyl groups. That is, the cellulose acetate according to the present disclosure has a polymerization unit represented by General Formula (A) below.

[Chem. 1]

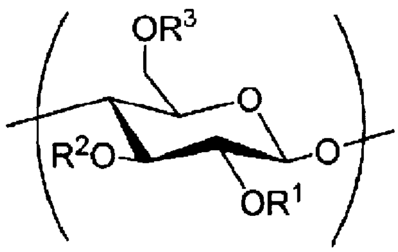

(A)

In Formula (A), $R^1$, $R^2$ and $R^3$ each independently represent a hydrogen atom or an acetyl group, provided that at least any of $R^1$, $R^2$, and $R^3$ is an acetyl group.

In the cellulose ester resin composition according to an embodiment of the present disclosure, a content of the cellulose ester resin is preferably 50 mass% or more, more preferably 60 mass% or more, and even more preferably 70 mass% or more, and is preferably 90 mass% or less, and more preferably 80 mass% or less, and a preferable range thereof is, for example, about from 50 to 90 mass%, about from 50 to 80 mass%, about from 60 to 90 mass%, about from 60 to 80

mass%, about from 70 to 90 mass%, or about from 70 to 80 mass%. When a mass proportion of the cellulose ester resin is 90 mass% or less, plasticity is improved, and when the mass proportion is 50 mass% or more, mechanical properties of the shaped article are improved.

Total degree of acetyl substitution

In a case where the cellulose ester resin includes cellulose acetate, a total degree of acetyl substitution of the cellulose acetate is preferably 2.7 or less, more preferably from 1.8 to 2.6, even more preferably from 2.1 to 2.5, and still even more preferably from 2.2 to 2.5. When the total degree of acetyl substitution is within the above range, an intermolecular interaction of the cellulose acetate is not too strong, and melt flowability of the cellulose ester resin composition can be improved. When the total degree of acetyl substitution of the cellulose acetate exceeds 2.6, the melt flowability of the cellulose ester resin composition is decreased. On the other hand, when the total degree of acetyl substitution of the cellulose acetate is less than 1.8, hydratability of the cellulose ester resin composition is increased, and thus weather resistance of the molded article of the cellulose ester resin composition deteriorates.

A combined acetic acid content of cellulose acetate is determined according to a method for measuring a combined acetic acid content in ASTM: D-817-91 (Testing methods for cellulose acetate, etc.) and converted to the total degree of acetyl substitution by the following formula. This is the most common procedure to determine the total degree of acetyl substitution of cellulose acetate. $DS = 162.14 \times AV \times 0.01/(60.052 - 42.037 \times AV \times 0.01)$

DS: Total degree of acetyl substitution
AV: Combined acetic acid content (%)

First, 500 mg of a dried cellulose acetate (sample) is precisely weighed and dissolved in 50 mL of a mixed solution of ultrapure water and acetone (volume ratio: 4:1), and then 50 mL of a 0.2 N aqueous sodium hydroxide solution is added to saponify the cellulose acetate at 25°C for 2 hours. Next, 50 mL of 0.2 N hydrochloric acid is added, and an amount of released acetic acid is titrated with a 0.2 N aqueous sodium hydroxide solution (0.2 N normal sodium hydroxide liquid) using phenolphthalein as an indicator. Also, a blank test (test without using any sample) is performed in the same manner. AV (combined acetic acid rate) (%) is then calculated according to the following equation:

$$AV\ (\%) = (A\text{-}B) \times F \times 1.201/\text{sample weight (g)}$$

where,

A represents a titration volume (mL) of 0.2 N normal sodium hydroxide liquid;
B represents a titration volume (mL) of 0.2 N normal sodium hydroxide liquid in the blank test; and
F represents a factor of 0.2 N normal sodium hydroxide liquid.

In the present disclosure, the cellulose acetate can exhibit thermoplasticity and is suitable for molding processing, because at least some of hydroxyl groups of β-glucose rings are esterified with acetyl groups as described above. In addition, in the present disclosure, the cellulose acetate can exhibit excellent strength and heat resistance when the shaped article is formed. Furthermore, since cellulose is a completely plant-derived component, environmental burden can be significantly reduced.

As a molecular weight of the cellulose acetate in the present disclosure, for example, a number average molecular weight (Mn) may be in a range of from 5000 to 1000000, more preferably in a range of from 10000 to 500000, and even more preferably in a range of from 100000 to 200000. A weight average molecular weight (Mw) is 400000 or less, more preferably from 160000 to 380000, and even more preferably 230000 to 360000. By setting the weight average molecular weight and the number average molecular weight in the above ranges, the melt flowability of the cellulose ester resin composition is improved, and moldability, mechanical strength, and the like of the shaped article of the cellulose ester resin composition can also be improved. When the weight average molecular weight of the cellulose acetate is smaller than the lower limit value, the shaped article of the cellulose ester resin composition may be fragile.

Further, a molecular weight distribution (Mw/Mn) of the cellulose acetate may be in a range of from 2.2 to 3.5, and is preferably in a range of from 2.4 to 3.2. When the molecular weight distribution is in the above range, the melt flowability of the cellulose ester resin composition is improved, and the moldability of the shaped article of the cellulose ester resin composition can be improved. When the Mw/Mn ratio of the cellulose acetate exceeds the upper limit, an amount of a gelled substance tends to increase.

In the present disclosure, in order to improve the melt flowability of the cellulose ester resin composition, it is preferable to use cellulose acetate having a predetermined total degree of acetyl substitution and a molecular weight in the

above range. Since it is difficult to reduce the degree of polymerization of cellulose acetate while maintaining the total degree of acetyl substitution of the cellulose acetate, cellulose acetate having a low degree of polymerization can be obtained with a desired degree of substitution, when a used cellulose raw material originally has a low degree of polymerization. In order to provide cellulose acetate having a low degree of polymerization, it is preferable to use cellulose having a predetermined saccharide composition ratio described below.

In the present disclosure, the number average molecular weight (Mn), the weight average molecular weight (Mw), and the molecular weight distribution (Mw/Mn) are each determined by performing size exclusion chromatography (GPC) measurement (GPC-light scattering method) by using the following apparatus and under the following conditions.

Apparatus: high performance liquid chromatography (Shimadzu LC-20A)
Solvent: 10 mM LiBr acetone
Column: Plgel 5 μm MIXED-C + Plgel 5 μm MIXED-D + Guard Column 5 μm
Flow rate: 0.8 mL/min
Temperature: 35°C
Sample concentration: 0.5 wt.%
Injection volume: 50 μl
Detection: Shimadzu RID-10A
Standard substance for MALLS calibration: EasiVial PM (PMMA)

Pulp

As a cellulose source serving as a raw material of the cellulose ester resin according to an embodiment of the present disclosure, pulp can be used. Examples of the pulp include wood pulp and linter pulp. In particular, wood pulp can be used.

Examples of the wood pulp include softwood pulp and hardwood pulp. Examples of the softwood pulp include softwood pulps obtained from spruce, pine, and boxwood. Examples of the hardwood pulp include eucalyptus and acacia. A single type of the pulp may be used alone, or two or more types of the pulp may be used in combination. For example, the softwood pulp and the hardwood pulp may be used in combination.

Method for Producing Cellulose Ester Resin

Examples of the method for producing cellulose acetate can include a production method including (1) bringing pulp into contact with acetic acid to perform pretreatment, (2) reacting cellulose contained in the pulp with acetic anhydride to acetylate the cellulose, after the pretreatment, (3) hydrolyzing cellulose acetate obtained by the acetylation, and (4) precipitating the cellulose acetate having an adjusted degree of acetyl substitution by the hydrolysis. Known conditions can be used for each of the above steps.

Polyvalent Hydroxyl Compound

The polyvalent hydroxyl compound contained in the cellulose ester resin composition is a compound represented by General Formula (1) below. $H-(OA)_{n1}-O-C_6H_4-X-C_6H_4-O-(AO)_{n2}-H$ (1)

The polyvalent hydroxyl compound represented by General Formula (1) functions as a plasticizer that enhances the moldability of the cellulose ester resin in the cellulose ester resin composition according to an embodiment of the present disclosure.

In General Formula (1), $C_6H_4$ is a benzene residue with two hydrogen removed from benzene. Here, the removed two hydrogen atoms may be any hydrogen atoms among six hydrogen atoms of benzene, and are preferably two hydrogen atoms at the 1- and 3-positions or two hydrogen atoms at the 1- and 4-positions, and more preferably two hydrogen atoms at the 1- and 4-positions. The positions of the two hydrogen atoms in one $C_6H_4$ contained in General Formula (1) are preferably the same as those in another $C_6H_4$ contained in General Formula (1).

In General Formula (1), X is a methylene group or a dimethylmethylene group, and more preferably a dimethylmethylene group.

In General Formula (1), A is an ethylene group or a methylethylene group, preferably an ethylene group.

In General Formula (1), a sum of n1 and n2 is 3 to 10. n1 and n2 are each independently an integer of from 1 to 7. The sum of n1 and n2 is preferably from 3 to 8, and more preferably from 4 to 6, and n1 and n2 are each independently preferably an integer of from 1 to 5, and; more preferably, the sum of n1 and n2 is from 4 to 6, and n1 and n2 are each independently an integer of from 2 to 4.

The polyvalent hydroxyl compound represented by General Formula (1) has a hydroxyl value of preferably from 200 to 340 mgKOH/g, and more preferably from 220 to 320 mgKOH/g. The hydroxyl value is measured in accordance with

JIS K 1557-1.

The polyvalent hydroxyl compound represented by General Formula (1) can be prepared by adding ethylene oxide to a bisphenol compound [2,2-bis(4-hydroxyphenyl)propane, bis(4-hydroxyphenyl)methane, or the like] by a known method described in, for example, JP 6-184301 A and JP 2000-086562 A.

From the viewpoint of more suitably exhibiting the effects of the invention of the present disclosure, the polyvalent hydroxyl compound represented by General Formula (1) is preferably a polyvalent hydroxyl compound obtained by adding from 3 to 10 moles of ethylene oxide to 1 mole of bisphenol A or bisphenol F, and more preferably a polyvalent hydroxyl compound obtained by adding from 4 to 6 moles of ethylene oxide to 1 mole of bisphenol A.

From the viewpoint of more suitably exhibiting the effects of the invention of the present disclosure, the polyvalent hydroxyl compound represented by General Formula (1) has a chemical formula weight of preferably from 330 to 600, and more preferably from 350 to 500.

From the viewpoint of more suitably exhibiting the effects of the invention of the present disclosure, a solubility parameter (SP value) of the polyvalent hydroxyl compound represented by General Formula (1) is preferably from 10.9 to 12.7 $(cal/cm^3)^{1/2}$, preferably from 11.2 to 12.7 $(cal/cm^3)^{1/2}$, and more preferably from 11.3 to 12.3 $(cal/cm^3)^{1/2}$. By setting n1 and n2 in General Formula (1) to be within predetermined ranges, the solubility parameter of the polyvalent hydroxyl compound can be adjusted to be within a preferable range.

In the present disclosure, the solubility parameter of the polyvalent hydroxyl compound means a value calculated by the mathematical formula (28) on page 153 of the Fedors method (Polymer Engineering and Science, February, 1974, Vol. 14, No. 2, P147 to 154) using the numerical values (the heat of evaporation and the molar volume of an atom or a functional group at 25°C) described on page 152 (Table 5) of the Fedors method.

Specifically, the solubility parameter of the polyvalent hydroxyl compound can be calculated from numerical values Δei and vi shown in Table 1 below, which are parameters of the Fedors method, by applying numerical values corresponding to types of atoms and atomic groups in the molecular structure to the following mathematical formula.

$$\text{Mathematical formula: SP value} = (\Sigma\Delta ei/\Sigma vi)^{1/2}$$

[Table 1]

| Parameters of the Fedors method | | |
|---|---|---|
| Atom or atomic group | $\Delta e_i$[cal/mol] | $v_i$[$cm^3$/mol] |
| $CH_3$ | 1125 | 33.5 |
| $CH_2$ | 1180 | 16.1 |
| CH | 820 | -1.0 |
| C | 350 | -19.2 |
| $H_2C=$ | 1030 | 28.5 |
| -CH= | 1030 | 13.5 |
| C= | 1030 | -5.5 |
| HC≡ | 920 | 27.4 |
| -C≡ | 1690 | 6.5 |
| Phenyl | 7630 | 71.4 |
| Phenylene (o.m.p) | 7630 | 52.4 |
| Phenyl (trisubstituted) | 7630 | 33.4 |
| Phenyl (tetrasubstituted) | 7630 | 14.4 |
| Phenyl (pentasubstituted) | 7630 | -4.6 |
| Phenyl (hexasubstituted) | 7630 | -23.6 |
| Ring closure 5 or more atoms | 250 | 16 |
| Ring closure 3 or 4 atoms | 750 | 18 |
| $CO_3$ (carbonate) | 4200 | 22.0 |

(continued)

| Parameters of the Fedors method | | |
|---|---|---|
| Atom or atomic group | $\Delta e_i$[cal/mol] | $v_i$[cm$^3$/mol] |
| COOH | 6600 | 28.5 |
| $CO_2$ | 4300 | 18.0 |
| CO | 4150 | 10.8 |
| CHO (aldehyde) | 5100 | 22.3 |
| $CO_2CO_2$ (oxalate) | 6400 | 37.3 |
| $C_2O_3$ (anhydride) | 7300 | 30.0 |
| HCOO (formate) | 4300 | 32.5 |
| $CONH_2$ | 10000 | 17.5 |
| CONH | 8000 | 9.5 |
| CON | 7050 | -7.7 |
| HCON | 6600 | 11.3 |
| HCONH | 10500 | 27.0 |
| COCl | 5000 | 38.0 |
| $NH_2$ | 3000 | 19.2 |
| NH | 2000 | 4.5 |
| N | 1000 | -9.0 |
| -N= | 2800 | 5.0 |
| CN | 6100 | 24.0 |
| $NO_2$ (aliphatic) | 7000 | 24.0 |
| $NO_2$ (aromatic) | 3670 | 32.0 |
| $NO_3$ | 5000 | 33.5 |
| $NO_2$ (nitrite) | 2800 | 33.5 |
| CSN | 4800 | 37.0 |
| NCO | 6800 | 35.0 |
| $NF_2$ | 1830 | 33.1 |
| $NF_2$ | 1210 | 24.5 |
| O | 800 | 3.8 |
| OH | 7120 | 10.0 |
| OH (disubstituted or on adjacent C atoms) | 5220 | 13.0 |

In the present disclosure, as the polyvalent hydroxyl compound represented by General Formula (1), a commercially available polyvalent hydroxyl compound may be used. For example, NEWPOL BPE series, BP series available from Sanyo Chemical Industries, Ltd., AE series available from Meiwa Chemical Industry Co., Ltd., BA Glycol EO series available from Nippon Nyukazai Co., Ltd., and the like can be used.

Only one type of the polyvalent hydroxyl compound represented by General Formula (1) or two or more types thereof may be included in the cellulose ester resin composition according to an embodiment of the present disclosure.

In the cellulose ester resin composition according to an embodiment of the present disclosure, a proportion of a mass of the cellulose ester resin is preferably 50 mass% or more, more preferably 60 mass% or more, and even more preferably 70 mass% or more, and is preferably 90 mass% or less, and more preferably 80 mass% or less, and a preferable range of the mass of the cellulose ester resin is, for example, about from 50 to 90 mass%, about from 50 to 80 mass%, about from 60 to 90 mass%, about from 60 to 80 mass%, about from 70 to 90 mass%, or about from 70 to 80 mass%, when a total mass of the cellulose ester resin and the polyvalent hydroxyl compound represented by General Formula (1) is 100

mass%. When the mass proportion of the cellulose ester resin is 90 mass% or less, the plasticity is improved, and when the mass proportion is 50 mass% or more, the mechanical properties of the shaped article are improved.

In the cellulose ester resin composition according to an embodiment of the present disclosure, a proportion of a mass of the polyvalent hydroxyl compound represented by General Formula (1) is preferably 10 mass% or more, and more preferably 20 mass% or more, and is preferably 50 mass% or less, more preferably 40 mass% or less, and even more preferably 30 mass% or less, and a preferable range of the mass of the polyvalent hydroxyl compound is, for example, about from 10 to 50 mass%, about from 10 to 40 mass%, about from 10 to 30 mass%, about from 20 to 50 mass%, about from 20 to 40 mass%, or about from 20 to 30 mass%, when the total mass of the cellulose ester resin and the polyvalent hydroxyl compound represented by General Formula (1) is 100 mass%. When the mass proportion of the polyvalent hydroxyl compound is 10% or more, the plasticity (moldability) of the cellulose ester resin composition according to an embodiment of the present disclosure is improved, and when the mass proportion is 50 mass% or less, smoke generation from an extruder is more suitably suppressed.

Additives

The cellulose ester resin composition according to an embodiment of the present disclosure may include an additive without impairing the performance of the cellulose ester resin composition. Examples of the additive include plasticizers (hereinafter, described as additional plasticizers) other than the polyvalent hydroxyl compound represented by General Formula (1), glass-based inorganic fillers, stabilizers (e.g., antioxidants, ultraviolet absorbers, heat stabilizers, and light stabilizers), colorants (e.g., dyes and pigments), antistatic agents, flame retardant aids, lubricants, anti-blocking agents, dispersants, flow agents, dripping inhibitors, antimicrobial agents, and additional components. Only one type of additive or two or more types thereof may be included in the cellulose ester resin composition according to an embodiment of the present disclosure.

Additional Plasticizers

Examples of the additional plasticizers include known plasticizers such as aromatic carboxylate esters [dialkylphthalates (having from 1 to 12 carbons in each alkyl) such as dimethylphthalate, diethylphthalate, dibutylphthalate, dihexylphthalate, dioctylphthalate, and di-2-ethylhexylphthalate, alkoxy (having from 1 to 6 carbons in the alkoxy group) alkylphthalates (having from 1 to 12 carbons) such as dimethoxyethylphthalate, alkyl aryl (having from 1 to 12 carbons)-alkylphthalates (having from 1 to 3 carbons) such as butylbenzylphthalate, alkylphthalyl (having from 1 to 6 carbons) alkyleneglycolates (having from 2 to 4 carbons) such as ethylphthalylethyleneglycolate and butylphthalylbutyleneglycolate, trialkyltrimellitates (having from 1 to 12 carbons) such as trimethyltrimellitate, triethyltrimellitate, trioctyltrimellitate, and tri-2-ethylhexyltrimellitate, and tetraalkylpyromellitates (having from 1 to 12 carbons) such as tetraoctylpyromellitate], fatty acid esters [adipates such as dibutyladipate, dioctyladipate, butoxyethoxyethylbenzyladipate, and dibutoxyethoxyethyladipate, azelates such as diethylazelate, dibutylazelate, and dioctylazelate, sebacates such as dibutylsebacate and dioctylsebacate, butyloleate, methylacetylricinoleate, and the like], lower fatty acid esters [such as diglycerintetraacetate of polyhydric alcohols (such as glycerin, trimethylolpropane, pentaerythritol, sorbitol, and the like), glycol esters (such as dipropyleneglycoldibenzoate), citrates [such as acetyltributylcitrate], amides [such as N-butylbenzenesulfonamide], and ester oligomers (such as caprolactone oligomers).

Glass-Based Inorganic Filler

A glass-based inorganic filler may be blended in the cellulose ester resin composition according to an embodiment of the present disclosure. When the glass-based inorganic filler is blended in the cellulose ester resin composition, ornamental design of the shaped article of the cellulose ester resin composition can be enhanced due to a difference in refractive index between the cellulose acetate and the glass-based inorganic filler. Examples of the glass-based inorganic filler can include glass fibers, glass flakes, and glass beads, and glass beads are preferably used.

A blending proportion of the glass-based inorganic filler is preferably from 0 to 30 parts by mass, more preferably from 2 to 20 parts by mass, and even more preferably from 5 to 10 parts by mass relative to 100 parts by mass of the cellulose ester resin composition.

When glass fibers are used as the glass-based inorganic filler, a shape of the glass fibers is not particularly limited, and an average length of the glass fibers can be, for example, about from 100 μm to 5 mm, and more preferably about from 500 μm to 3 mm, and an average diameter of the glass fibers can be, for example, about from 1 to 50 μm, and more preferably about from 3 to 30 μm. In the case of using glass flakes or glass beads, an average particle diameter of the glass flakes or the glass beads is not particularly limited, but can be, for example, about from 0.1 to 100 μm, and more preferably about from 0.1 to 50 μm. these glass-based inorganic fillers can be used alone or in combination of two or more.

The "average length", "average diameter", and "average particle diameter" described above can be calculated by

heating the cellulose ester resin composition at 600°C for 2 hours to ash the cellulose ester resin composition, to yield an ash residue, analyzing an image of the ash residue taken with a CCD camera (for example, dynamic image analysis/-particle (state) analyzer PITA-3, available from Seishin Enterprise Co., Ltd.), and calculating a weighted average.

Stabilizer

Examples of the stabilizer include an antioxidant, an ultraviolet absorber, a heat stabilizer, a light stabilizer, and a colorant. Examples of the antioxidant as the stabilizer include cyclic neopentanetetraylbis(octadecyl)phosphite, cyclic neopentanetetraylbis(2,4-di-t-butylphenyl)phosphite, cyclic neopentanetetraylbis(2,6-di-t-butyl-4-methylphenyl)phosphite, 2,2-methylenebis(4,6-di-t-butylphenyl)octylphosphite, and tris(2,4-di-t-butylphenyl)phosphite.
Examples of the ultraviolet absorber as the stabilizer can include benzotriazole-based ultraviolet absorbers.
A blending proportion of the stabilizer(s) can be from 0.05 to 1 part(s) by mass, and is preferably from 0.1 to 0.8 parts by mass, and more preferably from 0.15 to 0.5 parts by mass, relative to 100 parts by mass of the cellulose acetate.

(Additional Components)

Among the additives that may be included in the cellulose ester resin composition according to an embodiment of the present disclosure, examples of the additional components can include alicyclic epoxy compounds, and specific examples thereof include 3,4-epoxycyclohexylmethyl-3,4-epoxycyclohexylcarboxylate, a flexible alicyclic epoxy resin, an alicyclic epoxy diluent, an alicyclic monoepoxide having a vinyl group, a polyfunctional alicyclic epoxy resin, and an alicyclic solid epoxy resin.
Examples of the 3,4-epoxycyclohexylmethyl-3,4-epoxycyclohexylcarboxylate include trade name Celloxide 2021 (epoxy equivalent: from 128 to 145), trade name Celloxide 2021A (epoxy equivalent: from 130 to 140), and trade name Celloxide 2021P (epoxy equivalent: from 128 to 145) available from Daicel Corporation. Examples of the flexible alicyclic epoxy resin include trade name Celloxide 2081 (epoxy equivalent: from 190 to 210) available from Daicel Corporation. Examples of the alicyclic epoxy diluent include trade name Celloxide 3000 (epoxy equivalent is smaller than 93.5) available from Daicel Corporation. Examples of the alicyclic monoepoxide having a vinyl group include trade name Celloxide 2000 (epoxy equivalent: from 110 to 130) available from Daicel Corporation. Examples of the polyfunctional alicyclic epoxy resin include trade name Epolead GT301 (epoxy equivalent: from 200 to 220), trade name Epolead GT302 (epoxy equivalent: from 220 to 280), trade name Epolead GT401 (epoxy equivalent: from 210 to 235), and trade name Epolead GT403 (epoxy equivalent: from 270 to 300) available from Daicel Corporation. Further, examples of the alicyclic epoxy solid resin include trade name EHPE (epoxy equivalent: from 170 to 190) available from Daicel Corporation. When the alicyclic epoxy compound is added, the alicyclic epoxy compound can be added in an amount of from 0.1 to 1 part(s) by mass, and is added in an amount of preferably from 0.2 to 0.8 parts by mass, and more preferably from 0.3 to 0.7 parts by mass, relative to 100 parts by mass of the cellulose acetate.
From the viewpoint of more suitably exhibiting the effects of the invention of the present disclosure, a total mass proportion of the additives described above (that is, the plasticizer (hereinafter, described as the additional plasticizer), the glass-based inorganic filler, the stabilizer (for example, the antioxidant, the ultraviolet absorber, the heat stabilizer, the light stabilizer), the colorant (such as the dye, the pigment, or the like), the antistatic agent, the flame retardant aid, the lubricant, the anti-blocking agent, the dispersant, the flow agent, the dripping inhibitor, the antimicrobial agent, the additional component, and the like) is, for example, 35 mass% or less, 30 mass% or less, 25 mass% or less, 20 mass% or less, 15 mass% or less, 10 mass% or less, 5 mass% or less, 1 mass% or less for the upper limit, and 0 mass% or more, 1 mass% or more, 5 mass% or more for the lower limit, when the total mass of the cellulose ester resin and the polyvalent hydroxyl compound represented by General Formula (1) is 100 mass%.

Moisture Content of Cellulose Ester Resin Composition

A moisture content of the cellulose ester resin composition according to an embodiment of the present disclosure is preferably from 0.1 mass% to 0.4 mass% relative to a total amount of the composition. When the moisture content of the cellulose ester resin composition is within this range, problems due to a lack of interlayer adhesion can be suppressed, and foaming due to a high moisture content can be suppressed and thus transparency can be maintained. To adjust the moisture content of the cellulose ester resin composition to the above range, of melt-kneading conditions when preparing the cellulose ester resin composition, a resin temperature may be, for example, from 210 to 260°C, preferably from 215 to 255°C, and typically from 230 to 250°C. The resin temperature may be the resin temperature at a die. The moisture content can be adjusted to the above range by drying the prepared cellulose ester resin composition with dehumidified air at about from 80 to 95°C, typically 90°C, or previously adjusting the moisture content of the cellulose acetate to be used. Further, by packaging the cellulose ester resin composition having a moisture content adjusted in the above range with a moisture-proof packaging material described below, the moisture content can be maintained within this range.

The moisture content of the cellulose ester resin composition is measured by the Karl Fischer method in accordance with JIS K 7251.

Melt Flow Rate of Cellulose Ester Resin Composition

A melt flow rate (hereinafter, also referred to as MFR) of the cellulose ester resin composition according to an embodiment of the present disclosure in accordance with ISO1133 (weight of the resin flowing out for 10 min at 220°C under a load of 10 kg (g/10 min)) is preferably 20 or more, more preferably 40 or more, and even more preferably 50 or more. A large MFR of the cellulose ester resin composition indicates that the melt flowability of the cellulose ester resin composition is high. An upper limit of the MFR (220°C, a load of 10 kg, 10 min) is not particularly limited, and even if an MFR is too high to measure (measured values cannot be obtained), the cellulose ester resin composition having such an MFR is useful as the cellulose ester resin composition according to an embodiment of the present disclosure. On the other hand, a range of the MFR (190°C, a load of 10 kg, 10 min) is preferably 11 or more, more preferably 13 or more, and even more preferably 15 or more. On the other hand, the upper limit of the MFR is not particularly limited. The MFR can be adjusted by, for example, adjusting the physical properties (total degree of substitution, weight average molecular weight, and Mw/Mn ratio) of the cellulose ester resin as described above.

Shape of Cellulose Ester Resin Composition

Examples of a shape of the cellulose ester resin composition according to an embodiment of the present disclosure include a pellet form and a filament form (lobe form). Such a shape is suitable for materials for material extrusion (MEX).

The cellulose ester resin composition in the pellet form is applicable to FGF (using a screw extrusion head) described later. When a length of the longest portion of a particle constituting the pellet is set to L and a diameter of the largest circumscribed circle in a plane perpendicular to the longest portion is set to D, L/D is, for example, from 1 to 10, and preferably from 1 to 5. L is, for example, from 0.5 to 10 mm, preferably from 1 to 6 mm, and more preferably from 2 to 4 mm. Specifically, L/D is, for example, 1, 2, 3, 4, 5, 6, 7, 8, 9, or 10, and may be in a range between any two of the above numerical values. Specifically, L is, for example, 0.5, 1, 2, 3, 4, 5, 6, 7, 8, 9, or 10 mm, and may be in a range between any two of the above numerical values.

The cellulose ester resin composition in the filament form is easily applicable to FDM. The cellulose ester resin composition in the filament form is preferably a monofilament yarn having a diameter of from 1.65 to 3.00 mm, more specifically a monofilament yarn having a diameter of from 1.65 to 1.85 mm or from 2.70 to 2.90 mm, which is obtained by melt-extruding the cellulose ester resin composition and then cooling and solidifying the extruded composition in the atmospheric air or in water.

Hue-based Color System of Cellulose Ester Resin Composition

The cellulose ester resin composition according to an embodiment of the present disclosure may be highly transparent and may be colorless. In addition, a desired tone can be imparted by adding an appropriate colorant.

A range of an L* value expressed by the CIE1976L*a*b* color space (JIS Z 8781-4) of the cellulose ester resin composition when the colorant is not added is, for example, from 93 to 96, and preferably from 94 to 95. A range of an a* value is, for example, from -1.0 to 1.0, and preferably from -0.7 to 0.0. A range of a b* value is, for example, from 0.0 to 5.0, and preferably from 1.0 to 4.0.

The hue color system of the cellulose ester resin composition used is CIE1976 L*a*b*. As a measurement method, a transmittance can be measured by using CM-3600A available from Konica Minolta, Inc. as a spectrophotometer and a computer color matching system AUCOLOR-VP10 for plastics available from Kurabo Industries, Ltd. as a measuring program.

Moisture-Proof Packaging Material

The cellulose ester resin composition according to an embodiment of the present disclosure is preferably packaged with a moisture-proof packaging material. The cellulose ester resin composition packaged with the moisture-proof packaging material may be in any of a pellet form, a filament form, and other forms. When the cellulose ester resin composition is packaged with the moisture-proof packaging material, the moisture content of the cellulose ester resin composition can be prevented from changing depending on the amount of moisture in the atmospheric air, and thus the cellulose ester resin composition can be prevented from being colored.

Examples of the moisture-proof packaging material can include packaging materials made of a material having gas barrier properties, and specific examples thereof can include packaging materials made of a gas barrier film, aluminum

foil, or a metal vapor deposition film using, for example, aluminum or silica. Examples of a base material of the gas barrier film or the metal vapor deposition film include polyethylene terephthalate, biaxially oriented nylon, biaxially oriented polypropylene, non-oriented polypropylene, and an OPCP laminate film.

## Applications

When the cellulose ester resin composition according to an embodiment of the present disclosure is used in material extrusion, smoke generation is suppressed when the cellulose ester resin composition is extruded from an extruder. Therefore, the cellulose ester resin composition according to an embodiment of the present disclosure is advantageously used as a material for use in material extrusion (hereinafter, sometimes referred to as material for material extrusion). The material for material extrusion can be used as a shaping material for a 3D printer.

When the cellulose ester resin composition according to an embodiment of the present disclosure is used as the material for material extrusion and further used as the shaping material for a 3D printer, various large shaped articles can be produced. Specific examples of the shaped article can include members such as building members.

## Method for Producing Cellulose Ester Resin Composition

The cellulose ester resin composition according to an embodiment of the present disclosure can be produced by a method including mixing at least a cellulose ester resin and a polyvalent hydroxyl compound represented by General Formula (1) as raw materials.

The cellulose ester resin composition according to an embodiment of the present disclosure can be advantageously produced by a method including melt-kneading a raw material composition including at least a cellulose ester resin and a polyvalent hydroxyl compound represented by General Formula (1).

More specifically, examples of the method for producing a cellulose ester resin composition according to an embodiment of the present disclosure include a method including mixing at least a cellulose ester resin and a polyvalent hydroxyl compound represented by General Formula (1) and optionally, an additive, by using a known mixer such as a tumbler mixer, a Henschel mixer, or a ribbon mixer, and further melt-kneading the resultant mixture at from 200°C to 300°C by using a known extruder such as a single-screw extruder or a twin-screw extruder or a known kneader such as a heating roll or a Banbury mixer.

The order of mixing the cellulose ester resin and the polyvalent hydroxyl compound represented by General Formula (1), and optionally the additive is not limited. For example, the method may include premixing the cellulose ester resin and the polyvalent hydroxyl compound represented by General Formula (1), and optionally the additive at once, and then kneading the resultant mixture.

The method for producing a cellulose ester resin composition according to an embodiment of the present disclosure may further include drying the cellulose ester resin composition subjected to the melt-kneading described above.

Examples of the drying method include a method of drying the cellulose ester resin composition with dehumidified air at about from 80 to 95°C, typically 90°C. Subsequently, the obtained compound is extruded as a strand using a twin-screw extruder or the like, and a cellulose ester resin composition in the pellet form or filament form is obtained by using a technique such as air cutting as necessary.

A blending proportion of each component in the raw material composition may be the same as the blending proportion described above for each component. A method of adding another additive is not particularly limited as long as the additive is blended before the melt-kneading, and a known facility and operation may be used in appropriate combination. To adjust the moisture content of the cellulose ester resin composition to a predetermined range, it is preferable to adjust the melt-kneading conditions for the composition as described above or to perform drying using dehumidified air.

## Method for Producing Shaped Article Using Cellulose Ester Resin Composition

### (Material for Material Extrusion)

A method for producing a shaped article of the present disclosure includes shaping the cellulose ester resin composition according to an embodiment of the present disclosure.

More particularly, when the cellulose ester resin composition according to an embodiment of the present disclosure is used as a material for material extrusion, various shaped articles can be produced using a 3D printer. Examples of the material extrusion can include Fused Deposition Modeling (FDM) and Fused Granulate Fabrication (FGF). The cellulose ester resin composition according to an embodiment of the present disclosure can be suitably used in both of these methods, and is particularly suitable for use in FGF.

A gantry type 3D printer used in material extrusion generally has a chamber, and the chamber includes a heatable base, an extrusion head installed on a gantry structure, and a heat-melting device, and, as necessary, a guide of a material (filament) for material extrusion, and a raw material feeding unit such as a cartridge installation unit for the material for material extrusion. In some 3D printers, the extrusion head has a heat-melting function.

In the gantry type 3D printer, the extrusion head is installed on the gantry structure, and thus, it can optionally be moved over the X-Y plane of the base. The base is a platform constructing a target three-dimensional shaped article, a support material, or the like, and preferably has a configuration in which heating and temperature-keeping allows adhesiveness to a laminated product to be obtained and dimensional stability of the resulting resin shaped article as a desired three-dimensional shaped article to be improved. At least one of the extrusion head or the base is usually movable in the Z-axis direction perpendicular to the X-Y plane.

The material for material extrusion is fed from the raw material feeding unit to the extrusion head, and when the material for material extrusion is in the filament form, the material is fed to the extrusion head by using a pair of rollers or gears facing each other (FDM). On the other hand, when the material for material extrusion is in the pellet form, the material is fed via a hopper into the extrusion head (generally called ultra small-scale extrusion molding machine) having a function of heat-melting and a screw structure in the extrusion head (FGF).

In both FDM and FGF, the material for material extrusion is heat-melted by the extrusion head and extruded from a tip nozzle of the extrusion head. For example, the extrusion head feeds the material for material extrusion onto the base while moving its position by a signal transmitted based on a CAD model, and thus, the material is laminated and deposited. After this step is completed, the laminated deposit is removed from the base, the support material and the like are peeled off or an excess portion is cut off as necessary, and a desired three-dimensional shaped article can be obtained.

When the cellulose ester resin composition according to an embodiment of the present disclosure is used, it is preferable to use FGF, since in FGF, a discharge amount of the material for material extrusion is large and a large shaped article can also be produced in a short time. In this case, the cellulose ester resin composition is used in the pellet form. The cellulose ester resin composition in the pellet form according to an embodiment of the present disclosure can be used not only in the gantry type 3D printer described above, but also in a large-scale robotic arm type 3D printer equipped with a small-scale extrusion molding machine used in FGF as the extrusion head.

On the other hand, in the case of FDM, it is common to engage the material for material extrusion with a driving roller such as a nip roller or a gear roller and feed the material to the extrusion head while taking the material up. This method is advantageous in forming a small shaped article having a relatively simple structure.

A temperature to achieve fluidity suitable for extruding the material for material extrusion according to an embodiment of the present disclosure is usually about from 190 to 280°C, which can be set by a general-purpose 3D printer, and in the production method according to an embodiment of the present disclosure, a temperature inside the extrusion head is usually 280°C or less, preferably from 220 to 270°C. In addition, a base temperature is usually set to from 95 to 105°C, typically about 100°C in the case of FDM. Further, for example, if a table temperature and/or a chamber temperature are/is raised to about 150°C, bonding strength between the laminated materials is increased. On the other hand, in the case of FGF, the base temperature is usually set to from 65 to 85°C, typically about 80°C, although it depends on the nozzle diameter of the extrusion head. In the case of FGF, the base may not be used. By using such conditions, a shaped article can be stably produced.

A temperature (discharge temperature) of the material for material extrusion when discharged from the extrusion head is preferably 180°C or higher, more preferably 190°C or higher, and on the other hand, is preferably 270°C or lower, more preferably 260°C or lower, and even more preferably 240°C or lower. The temperature of the material for material extrusion is preferably equal to or higher than the lower limit value described above in terms of extruding the material for hot-melt extrusion according to an embodiment of the present disclosure, and is also preferable from the viewpoint of preventing so-called stringing, in which fragments of the material for material extrusion remains as thinly stretched fragments, and thus, the appearance is deteriorated in the shaped article.

On the other hand, the temperature of the material for material extrusion is preferably equal to or lower than the upper limit value described above, since the occurrence of problems such as foaming, thermal decomposition, burning, smoke generation, odor, and stickiness of the material for material extrusion according to an embodiment of the present disclosure is easily prevented, and it is possible to discharge the material at high speed, and a shaping efficiency tends to be improved.

In the case of FDM, the material for material extrusion to be discharged from the extrusion head is discharged in the filament form having preferably a diameter of from 0.1 to 1.0 mm, more specifically, a diameter of from 0.2 to 1.0 mm, from 0.2 to 0.8 mm, from 0.2 to 0.6 mm, from 0.2 to 0.4 mm, from 0.4 to 1.0 mm, from 0.4 to 0.8 mm, or 0.4 to 0.6 mm, and forms a monofilament yarn. When a shaped article is formed of such a monofilament yarn, the shaped article has high versatility. On the other hand, in the case of FGF, a diameter of the tip nozzle of the extrusion head can be, for example, 0.5 mm, 1 mm, 2 mm, 3 mm, 4 mm, 5 mm, 6 mm, 8 mm, or 10 mm (the diameter of the monofilament yarn is about 0.5, 1.0, 1.5, 2.0, 2.5, 3.0, 3.5, 4.0, 4.5, 5.0, 5.5, 6.0, 8.0, 10, 12, or 14 mm, and may be in a range between any two of the above numerical values), and can be appropriately selected in consideration of the balance between the quality of the shaped

article and the shaping time.

In the production of a shaped article by a 3D printer using a material for hot-melt extrusion for 3D printer shaping, when a shaped article is produced while a material for material extrusion in the form of a monofilament yarn discharged from the extrusion head is laminated, irregularities (steps) may be formed in a surface of the shaped article due to insufficient adhesion between a layer of the monofilament yarn of the material for material extrusion previously discharged and a layer of the monofilament yarn of the material for material extrusion discharged on the layer of the material previously discharged or due to discharge unevenness. This problem is likely to occur particularly when a large member is shaped by FGF. When the surface of the shaped article has irregularities, not only the appearance may be deteriorated, but also problems such as the shaped article being easily damaged may occur.

The material for material extrusion for a 3D printer according to an embodiment of the present disclosure has high melt flowability during shaping. Therefore, even when FGF is used, the discharge unevenness during shaping is suppressed, and a shaped article having excellent appearance, surface properties and the like can be stably produced.

When a shaped article is made while the material for material extrusion of the monofilament yarn discharged from the extrusion head by the 3D printer is laminated, the material may adhere to the nozzle portion of the extrusion head, and the adhering material for material extrusion may be colored by heat and form black foreign matter (black spots and/or black stripes). When such foreign matter is contaminated into the shaped article, not only the appearance may be deteriorated, but also another problem may occur, such as the shaped article may be easily damaged.

The material for material extrusion for a 3D printer according to an embodiment of the present disclosure is less likely to be colored even when adhering to the nozzle portion, and thus, a shaped article having an excellent appearance can be stably produced.

Examples

The present disclosure will next be described in more detail by way of Examples, but the present disclosure is not limited to Examples.

Production of Polyvalent Hydroxyl Compound

<Production Example 1>

Bisphenol A (900 g), xylene (270 g), and triethyl amine (0.36 g) were placed in an autoclave made of steel use stainless (SUS), having a volume of 2L, and equipped with a stirrer and a temperature controller, the inside of a vessel in the autoclave was purged with nitrogen gas, and heating was then performed. When the temperature inside the vessel reached 80°C, ethylene oxide (540 g) was added dropwise over 14 hours while the temperature inside the vessel being maintained at from 75 to 80°C and the pressure inside the vessel being maintained at from 0.15 to 0.25 MPa. The temperature inside the vessel was then raised to 110°C. Since the pressure inside the vessel at 110°C ceased to change 15 hours after the start of the dropwise addition of ethylene oxide, the pressure inside the reaction vessel was reduced while the temperature being maintained at 110°C, and xylene was distilled off over 5 hours. Then, water (1.35 g) and succinic acid (0.18 g) were added and the resultant mixture was stirred at 100°C for 2 hours to neutralize triethyl amine, thereby forming a polyvalent hydroxyl compound (A-3).

<Production Example 2>

A polyvalent hydroxyl compound (A-4) was obtained in accordance with Production Example 1 except that 540 g, as the weight of ethylene oxide, was changed to 1400 g.

<Production Example 3>

A polyvalent hydroxyl compound (Comparative A-2) was obtained in accordance with Production Example 1 except that 540 g, as the weight of ethylene oxide, was changed to 2467 g.

Preparation of Cellulose Ester Resin Composition

Examples 1 to 15 and Comparative Example 1 to 3

To 100 parts by mass of the cellulose acetate shown in Table 2, other components corresponding to each of Examples 1 to 15 and Comparative Example 1 to 3 were added as shown in Table 2 and the respective resultant mixtures were mixed by hand blending. At this time, each of the polyvalent hydroxyl compounds was used after the temperature was

adjusted to 60°C. Thereafter, each of the mixtures was sufficiently stirred at room temperature with a Henschel mixer (available from Mitsui Miike Machinery Co., Ltd.). Each of the obtained compounds was extruded as strands using a 30 m/m φ twin-screw extruder at the set temperature shown in Table2, and the strands were air-cut and molded into pellets (granulation). The resin temperatures near an exit of the twin-screw extruder at the granulation are shown in Table 2. The size of the pellets was about 3 mm in length and about 2.5 mm in diameter. Finally, the pellets were dried in a dryer at 90°C for 3 hours.

Volatile Content at 230°C

A cellulose ester resin composition (X-1) was heated to 230°C using a thermogravimetric differential thermal analyzer (TG-DTA), the weight loss due to the heating was measured, the proportion of the weight loss to the weight before the heating was calculated, and the calculated value was described as a volatile content at 230°C.

Measuring apparatus: Differential thermal analyzer (TG-DTA) (TG-8120, available from Rigaku Corporation) Measurement conditions: The composition was heated from 40°C to 230°C at a heating rate of 10°C/min in an air atmosphere, and the difference between the weight before the heating and the weight when the temperature reached 230°C was determined and defined as the weight loss.

Symbols shown in the respective cells of the raw material composition in Table 2 mean the following raw materials, respectively.

Polyvalent Hydroxyl Compound

(A-1) NEWPOL BPE-40, the sum of n1 and n2 equals to 4, X represents a dimethylmethylene group, and A represents an ethylene group. hydroxyl equivalent: 275 mgKOH/g, SP value: 11.9 [available from Sanyo Chemical Industries, Ltd.]

(A-2) NEWPOL BPE-60, the sum of n1 and n2 equals to 6, X represents a dimethylmethylene group, and A represents an ethylene group. hydroxyl equivalent: 230 mgKOH/g, SP value: 11.4 [available from Sanyo Chemical Industries, Ltd.]

(A-3): Product produced in Production Example 1, the sum of n1 and n2 equals to 3, and X represents a dimethylmethylene group. hydroxyl equivalent: 320 mgKOH/g, SP value: 12.1

(A-4): Product produced in Production Example 2, the sum of n1 and n2 equals to 8, X represents a dimethylmethylene group, and A represents an ethylene group. hydroxyl equivalent: 340 mgKOH/g, SP value: 11.2

(A-5): NEWPOL BP-3P, the sum of n1 and n2 equals to 3, X represents a dimethylmethylene group, and A represents a methylethylene group. hydroxyl equivalent: 280 mgKOH/g, SP value: 11.5 [available from Sanyo Chemical Industries, Ltd.]

(A-6): NEWPOL BP-5P, the sum of n1 and n2 equals to 5, X represents a dimethylmethylene group, and A represents a methylethylene group. hydroxyl equivalent: 210 mgKOH/g, SP value: 10.9 [available from Sanyo Chemical Industries, Ltd.]

(A-7): NEWPOL BPE-100, the sum of n1 and n2 equals to 10, X represents a dimethylmethylene group, and A represents an ethylene group. hydroxyl equivalent: 160 mgKOH/g, SP value: 10.9 [available from Sanyo Chemical Industries, Ltd.]

Comparative Compound

Triethyl citrate having an SP value of 11.1 "available from FUJIFILM Wako Pure Chemical Corporation"

(Comparative A-1): NEWPOL BPE-20, the sum of n1 and n2 equals to 2, X represents a dimethylmethylene group, and A represents an ethylene group. hydroxyl equivalent: 340 mgKOH/g, SP value: 12.6

(Comparative A-2): Product produced in Production Example 3, the sum of n1 and n2 equals to 14, and X represents a dimethylmethylene group. hydroxyl equivalent: 130 mgKOH/g, SP value: 10.6

Cellulose Ester

Cellulose acetate [available from FUJIFILM Wako Pure Chemical Corporation, degree of substitution: 2.4, average degree of polymerization: about 150, molecular weight: about 40000]

Shaping Test Using 3D Printer

A shaped article was produced using each of the cellulose ester resin compositions obtained in Examples and Comparative Example as a material and using a 3D printer (FGF) having a screw extruder. A heating temperature in an

extrusion head (a discharge temperature from a tip nozzle of the extrusion head) was set to 220°C. An orifice diameter of the tip nozzle of the extrusion head was set to 10 mm, a shaping speed was set to 1000 mm/min, and a shaped article in a basket form with a height of 200 mm was obtained.

Evaluation of Suppression of Smoke Generation

In the "Shaping Test Using 3D Printer", the situation of smoke generation from the tip nozzle was confirmed by the following method, and the suppression of the smoke generation of each of the cellulose ester resin compositions was evaluated according to the following criteria. The results are shown in Table 2.

Evaluation Criteria for Suppression of Smoke Generation

Evaluation A: The weight loss rate of each of the cellulose ester resin compositions at 230°C was evaluated through analysis according to the method described in the "Volatile Content at 230°C" above, and it was evaluated as OK if the weight loss rate was less than 2%, and it was evaluated as Fail if the weight loss rate was equal to or more than 2%.

Evaluation B: According to the method described in the "Evaluation of Suppression of Smoke Generation" above, whether or not there was smoke generation during the shaping was visually confirmed, and it was evaluated as OK if no smoke generation was visually confirmed during the shaping, and it was evaluated as Fail if smoke generation was visually confirmed during the shaping.

Evaluation of Transparency

To a disposable cup made from polypropylene, 20 parts by weight of the polyvalent hydroxyl compound and 80 parts by weight of cellulose acetate were added, mixed by using a glass stirring rod at room temperature for 3 minutes, the resultant mixture was melt-kneaded at 60 rpm for 5 minutes by using a laboratory batch kneader (product name of "Labo Plastomill" available from Toyo Seiki Seisakusho, Ltd.), and thus, a cellulose ester resin composition was yielded. The cellulose ester resin composition was removed onto a release paper and the released cellulose ester resin composition was visually observed from above. If the release paper under the cellulose ester resin composition was visible, the composition was described as "transparent", if the release paper under the cellulose ester resin composition was not visible, the composition was described as "opaque", and if the polyvalent hydroxyl compound and cellulose acetate was not homogeneously kneaded, the composition was described as "-".

[Table 2]

| | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Comparative Example 1 | Comparative Example 2 | Comparative Example 3 |
|---|---|---|---|---|---|---|---|---|---|---|---|---|---|---|---|---|---|---|---|---|
| Composition Parts by Weight | Cellulose acetate | | 100 | 100 | 100 | 100 | 100 | 100 | 100 | 100 | 100 | 100 | 100 | 100 | 100 | 100 | 100 | 100 | 100 | 100 |
| | Polyvalent hydroxyl compound | A-1 | 37 | 33.5 | 30 | | | | | | | | | | | | | | | |
| | | A-2 | | | | 37 | 33.5 | 30 | | | | | | | | | | | | |
| | | A-3 | | | | | | | 37 | 33.5 | 30 | | | | | | | | | |
| | | A-4 | | | | | | | | | | 37 | 33.5 | 30 | | | | | | |
| | | A-5 | | | | | | | | | | | | | 30 | | | | | |
| | | A-6 | | | | | | | | | | | | | | 33 | | | | |
| | | A-7 | | | | | | | | | | | | | | | 35 | | | |
| | | Comparative A-1 | | | | | | | | | | | | | | | | | 30 | |
| | | Comparative A-2 | | | | | | | | | | | | | | | | | | 33 |
| | Triethyl citrate | | | | | | | | | | | | | | | | | 37 | | |
| | Irgafos168 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Temperature Conditions At Time of Granulation | Set temperature | °C | 190-210 | 200-240 | 200-240 | 190-210 | 200-240 | 200-240 | 190-210 | 200-240 | 200-240 | 190-210 | 200-240 | 200-240 | 200-240 | 200-240 | 200-240 | 190-210 | 200-240 | 200-24 |
| | Resin temperature | °C | 230 | 250 | 250 | 230 | 250 | 250 | 230 | 250 | 250 | 230 | 250 | 250 | 250 | 250 | 250 | 230 | 250 | 250 |
| Evaluation Of Suppression Of Smoke Generation | Evaluation A | | OK | OK | OK | OK | OK | OK | OK | OK | OK | OK | OK | OK | OK | OK | OK | Fail | Cannot be shaped | Cannot be shaped |
| | Evaluation B | | OK | OK | OK | OK | OK | OK | OK | OK | OK | OK | OK | OK | OK | OK | OK | Fail | Cannot be shaped | Cannot be shaped |
| Transparency | | | Transparent | Transparent | Transparent | Transparent | Transparent | Transparent | Transparent | Transparent | Transparent | Transparent | Transparent | Transparent | Transparent | Transparent | Opaque | Transparent | - | - |

Production of Filament (Examples 3, 6, and 9)

Using a filament maker for prototype-filaments (Filament Maker Composer 450), filaments of 1.75 mm ± 0.1 mm were produced from each of the pellets produced in Example 3, 6, and 9 under the conditions of a screw heating temperature of 245°C and a rotation speed of 3.5 rpm. The filaments were dried at 90°C for 3 hours.

Production of Filament (Comparative Examples 1-3)

Using a filament maker for prototype-filaments (Filament Maker Composer 450), filaments of 1.75 mm ± 0.1 mm were each produced from the pellets produced in Comparative Examples 1-3 under the conditions of a screw heating temperature of 220°C and a rotation speed of 3.5 rpm. The filaments were dried at 80°C for 3 hours.

Shaping Test 2 Using 3D Printer

Using the filaments produced from each of the cellulose ester resin compositions obtained in Examples 3, 6, and 9 and Comparative Examples 1-3 as a material, a shaped article was produced using a filament type 3D printer (FDM). At this time, the filaments were dried at 70°C by using a dryer for filaments during the shaping in addition to the drying as in Comparative Example 1, and thus, moisture absorption of the filaments was suppressed. The heating temperature in the extrusion head (the discharge temperature from the tip nozzle of the extrusion head) was set to 250°C. The orifice diameter of the tip nozzle of the extrusion head was set to 0.4 mm, the shaping speed was set to 60 mm/s, the table temperature was set to 150°C, the chamber temperature was set to 150°C, and a test piece having lengths of four vertical and horizontal sides of 20 mm and a thickness of 1 mm was shaped.

Evaluation 2 of Suppression of Smoke Generation

In the "Production of Filament" and "Shaping Test 2 Using 3D Printer" above, the situation of smoke generation from the tip nozzle was also confirmed in the same manner as that in the "Shaping Test using 3D Printer", and the confirmation gave the same results as that of the Shaping Test using 3D Printer".

## Claims

1. A cellulose ester resin composition for use in material extrusion, the composition comprising: a cellulose ester resin; and a polyvalent hydroxyl compound represented by General Formula (1):

$$H\text{-}(OA)_{n1}\text{-}O\text{-}C_6H_4\text{-}X\text{-}C_6H_4\text{-}O\text{-}(AO)_{n2}\text{-}H \qquad (1)$$

   where $C_6H_4$ is a benzene residue with two hydrogen removed from benzene, X is a methylene group or a dimethylmethylene group, A is an ethylene group or a methylethylene group, a sum of n1 and n2 is 3 to 10, and n1 and n2 are each independently an integer of from 1 to 7.

2. The cellulose ester resin composition according to claim 1, wherein the cellulose ester resin is cellulose acetate.

3. The cellulose ester resin composition according to claim 1 or 2, wherein a proportion of a mass of the polyvalent hydroxyl compound represented by General Formula (1) is from 10 to 50 mass% when a total mass of the cellulose ester resin and the polyvalent hydroxyl compound represented by General Formula (1) is 100 mass%.

4. The cellulose ester resin composition according to claim 1 or 2, wherein a proportion of a mass of the cellulose ester resin is from 50 to 90 mass% when a total mass of the cellulose ester resin and the polyvalent hydroxyl compound represented by General Formula (1) is 100 mass%.

5. The cellulose ester resin composition according to claim 1 or 2, wherein the cellulose ester resin composition has a pellet form or a filament form.

6. A shaping material for a 3D printer, the shaping material comprising the cellulose ester resin composition described in claim 1 or 2.

7. A shaped article obtained by molding the shaping material for a 3D printer described in claim 6.

**8.** A method for producing a shaped article, the method comprising shaping the cellulose ester resin composition described in claim 1 or 2.

**9.** The method for producing a shaped article according to claim 8, the method further comprising:

using a 3D printer,
the 3D printer including at least a chamber, the chamber including a heatable base, an extrusion head, and a feeding unit of a shaping material for a 3D printer; and
feeding the shaping material for a 3D printer described in claim 1 or 2 to the feeding unit of the shaping material for a 3D printer.

**10.** The method for producing a shaped article according to claim 9, wherein

the extrusion head includes a screw structure in the extrusion head, and
the extrusion head has a function of heat-melting the shaping material for a 3D printer.

**11.** A method for producing a cellulose ester resin composition for use in material extrusion, the method comprising melt-kneading a raw material composition including a cellulose ester resin and a polyvalent hydroxyl compound represented by General Formula (1):

$$H\text{-}(OA)_{n1}\text{-}O\text{-}C_6H_4\text{-}X\text{-}C_6H_4\text{-}O\text{-}(AO)_{n2}\text{-}H \quad (1)$$

where $C_6H_4$ is a benzene residue with two hydrogen removed from benzene, X is a methylene group or a dimethylmethylene group, A is an ethylene group or a methylethylene group, a sum of n1 and n2 is 3 to 10, and n1 and n2 are each independently an integer of from 1 to 7.

Europäisches Patentamt
European Patent Office
Office européen des brevets

# EUROPEAN SEARCH REPORT

Application Number
EP 25 21 5176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP H11 349537 A (DAICEL CHEM; DAIHACHI CHEM IND) 21 December 1999 (1999-12-21)<br>* example 3 * | 1-8,11<br>9,10 | INV.<br>B29C64/10<br>B29C64/314<br>C08G65/40<br>C08L1/12<br>C08K5/053 |
| Y,D | JP 2024 043226 A (NEQAS CO LTD) 29 March 2024 (2024-03-29)<br>* paragraphs [0033], [0036]; examples 1-6 * | 9,10 | |
| A | JP 2011 094118 A (FUJIFILM CORP) 12 May 2011 (2011-05-12)<br>* claim 1 * | 1-11 | |

TECHNICAL FIELDS SEARCHED (IPC)

C08G
B29C
C08L
C08K

The present search report has been drawn up for all claims

1

| Place of search | Date of completion of the search | Examiner |
|---|---|---|
| Munich | 12 March 2026 | Arz, Marius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 5176

This annex lists the patent family members relating to the patent documents cited in the above-mentioned European search report. The members are as contained in the European Patent Office EDP file on
The European Patent Office is in no way liable for these particulars which are merely given for the purpose of information.

12-03-2026

| Patent document cited in search report | Publication date | Patent family member(s) | Publication date |
|---|---|---|---|
| JP H11349537 A | 21-12-1999 | NONE | |
| JP 2024043226 A | 29-03-2024 | NONE | |
| JP 2011094118 A | 12-05-2011 | JP 2011094118 A | 12-05-2011 |
| | | TW 201127894 A | 16-08-2011 |
| | | WO 2011040378 A1 | 07-04-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2024043226 A
- JP 6184301 A
- JP 2000086562 A


### Non-patent literature cited in the description


- Polymer Engineering and Science. 1974, vol. 14, 147-154